# EUROPÄISCHE PATENTSCHRIFT

(11) **EP 0 784 761 B1**
(45) Veröffentlichungstag und Bekanntmachung des Hinweises auf die Patenterteilung: **18.11.1998**
(21) Anmeldenummer: 95928987.7
(22) Anmeldetag: 25.08.1995
(51) Int. Cl.: F16D 65/092

(54) **BREMSBELAG FÜR TEILBELAG-SCHEIBENBREMSEN, INSBESONDERE VON SCHIENENFAHRZEUGEN**
BRAKE PAD FOR PARTIAL-PAD DISC BRAKES, ESPECIALLY ON RAILWAY ROLLING STOCK
GARNITURE DE FREIN POUR FREINS A DISQUES A GARNITURE PARTIELLE, NOTAMMENT DE VEHICULES SUR RAILS

(30) Priorität: 12.10.1994 DE 4436457
(43) Veröffentlichungstag der Anmeldung: 23.07.1997
(73) Patentinhaber: KNORR-BREMSE Systeme für Schienenfahrzeuge GmbH, 80809 München (DE)
(72) Erfinder: WIRTH, Xaver, D-85737 Ismaning (DE)
(86) Internationale Anmeldenummer: DE9501139
(87) Internationale Veröffentlichungsnummer: WO9612119

(56) Entgegenhaltungen:
- EP-A- 0 073 897
- EP-A- 0 106 782
- CA-A- 2 120 392
- DE-U- 8 514 607
- US-A- 2 791 294
- US-A- 3 297 117

## Beschreibung

Die Erfindung betrifft einen Bremsbelag nach dem Gattungsbegriff des Patentanspruches 1.

Großflächige Bremsbeläge, wie bei Schienenfahrzeugscheibenbremsen üblich, weisen bei energiereichen Bremsvorgängen keine auch nur annähernd konstante Flächenpressung auf ihrer Reibfläche auf. Dies ist unter anderem auf ungleichmäßige Krafteinleitung von Seiten der Zuspannvorrichtung z.B. bei Verwendung von Schwalbenschwanzführungen zurückzuführen, auch auf die Tatsache, daß zufällig wärmere Bereiche der Oberflächen von Belag und Bremsscheibe auf Grund der Wärmeausdehnung der Reibmaterialien aus ihren Oberflächen hervortreten, wobei diese Bereiche höher belastet und deshalb im weiteren Fortgang des Bremsens heißer als die benachbarten Zonen werden. Die Folge derartiger "hotspots" auf Scheibe und Belag sind vorzeitige Wärmerisse an Scheibe und Belagschäden infolge thermischer Überlastung. Insbesondere bei harten Belagmaterialien (harzgebundene Materialien, Metallsinterstoffe) ist der vorgenannte Vorgang extrem stark ausgebildet.

Zur Vermeidung der vorstehenden Nachteile wurden - in erster Linie bei Verwendung von Sinterwerkstoffen - bereits Bremsbeläge eingesetzt, welche elastisch gelagerte Einzelelemente aufweisen (DE-OS 43 01 006). Bei derartigen Anordnungen sind jedoch im wesentlichen zwei Nachteile festzustellen: Die Flächenpressungen an den einzelnen Elementen sind nach wie vor nicht konstant, sie sind einfederungsabhängig entsprechend der jeweiligen Federkonstante der elastischen Bettung der einzelnen Elemente. Zudem ist der Belagaufwand insgesamt sehr aufwendig und folglich sehr teuer; es handelt sich um eine Verteuerung um das Vier- bis Sechsfache gegenüber organisch gebundenen, einstückigen Belägen.

Bei einem bekannten gattungsgemäßen Bremsbelag (CA-2120392) sind Belagelemente tragende Trägerbleche begrenzt schwenkbar an einem Tragkörper in Form einer Tragplatte angeordnet. Die Belagelemente sind jeweils starr mit dem Trägerblech verbunden, welches seinerseits an der Tragplatte angenietet ist. Jeweils drei Belagelemente befinden sich in den drei Ecken eines derartigen Trägerbleches welches die Form eines Dreiecks besitzt. Die zur Verbindung des Trägerbleches mit der Tragplatte dienenden Nieten sind jeweils im Mittelbereich der drei Schenkel des dreieckigen Trägerbleches plaziert, so daß die freien Ecken des Trägerbleches in begrenztem Maße Nickbewegungen gegenüber der Tragplatte vollführen können. Zu diesem Zweck sind die Trägerbleche in ihrer Mitte mit Schwächungen versehen. Infolge einer derartigen Geometrie der Positionierung der Belagelemente und der Befestigung des Trägerbleches an der eigentlichen Tragplatte ist sowohl der Schwenkwinkel als auch die Schwenkrichtung der Belagelemente in engem Rahmen vorgegeben, d.h. die Schwenkachse jedes Belagelementes bleibt im allgemeinen konstant. Trotz der in der Mitte der Trägerbleche befindlichen Schwächungen ist außerdem eine gewisse Interdependenz der Bewegungen eines Belagelementes gegenüber dem nächstliegenden in Kauf zu nehmen, da Schwenkbewegungen in einer Ecke sich über die Mitte des Trägerbleches auf den Bereich der jeweils angrenzenden beiden Belagelemente übertragen können. Die Folge sind unerwünschte Schrägstellungen der Belagelemente, d.h. Reaktionen eines Belagelementes gegenüber einer Spur auf der Bremsscheibe werden zum Teil auch auf die nächstliegenden Belagelemente übertragen. Mit Hilfe der Belagelemente ist darüberhinaus kein flächengleiches Schleifbild erzielbar, da die Schwenk- bzw. Drehwinkel festgelegt sind. Die Folge sind,,hot spots" an der Bremsscheibe, da federnde Rückstellkräfte als verstärkte Reaktionskräfte zu Temperaturerhöhungen an der Scheibe führen können.

Davon ausgehend besteht die Aufgabe der Erfindung darin, einen Bremsbelag der gattungsgemäßen Art mit baulich einfachen Mitteln so auszugestalten, daß eine Vergleichmäßigung der Flächenpressung an der Reibfläche der Bremsscheibe erzielbar ist. Es soll eine eindeutig definierte Aufteilung der Gesamtzuspannkraft auf die einzelnen Belagelemente ermöglicht sein. Zur Erzielung von Kosteneinsparungen soll es auch möglich sein, den Bremsbelag oder Teile desselben in kostengünstiger Weise auszutauschen.

Zur Lösung dieser Aufgabe dienen die Merkmale nach dem Kennzeichnungsteil des Patentanspruches 1.

Durch die Aufteilung des gesamten Belages in mehrere Belagelemente bzw. Gruppenelemente und durch die Art der Lagerung der Belagelemente bzw. Gruppenelemente an einem Tragkörper einschließlich Festlegung der Krafteinleitung der Zuspannkraft ist eine gleichmäßige Aufteilung dieser Zuspannkraft auf eine Vielzahl einzelner Belagelemente bzw. Belagklötze ermöglicht; zudem sind durch die Belagelemente bzw. Gruppenelemente kleine, auswechselbare Einheiten gebildet, was eine wesentliche Verbilligung gegenüber herkömmlichen Bremsbelägen mit Schwalbenschwanzführung beinhaltet. Bei symmetrisch zur Mittellinie des Tragkörpers (Belagträger oder Belaghalter) angeordneten Belagelementen bzw. aus Belagelementen gebildeten Belaggruppen ist die Aufteilung des Gesamtbelags in zwei Halbbeläge möglich, wobei als kleinste Belageinheit ein Belagelement pro Trägerblech vorgesehen sein kann. Die Belagelemente bzw. die durch diese gebildete Gruppen (Gruppenelemente) können mit dem sie tragenden Trägerblech entweder an einem gemeinsamen Belagträger oder direkt am Belaghalter angeordnet sein. Für die Vergleichmäßigung der Flächenanpressung ist sowohl die Art der Lagerung der Belagelemente an den Trägerblechen, die Art der Lagerung der Trägerbleche an ihrem Träger, dem Belagträger oder dem Belaghalter, als auch die Art der Einleitung der Zuspannkräfte gegenüber den gebildeten Schwerpunkten verantwortlich. Die Lagerung jedes einzelnen Elements, also jedes Belagklotzes am Trägerblech besteht aus der Paarung einer Kugelpfanne mit einer Kugelkalotte, welche so ausgebildet sind, daß die resultierende Kraft aus Anpreßkraft am Bremsbelag und senkrecht dazu stehender Reibkraft jeweils senkrecht zu der an der Kugelpfanne bestehenden Kugelfläche steht. Die Resultierende verläuft hierbei durch den Flächenschwerpunkt des jeweiligen Belagelements im Bereich der Reibung an der Bremsscheibe. Bei Vergleichmäßigung der Flächenpressung des Gesamtbelages, also gleichmäßigerer Bremsscheibenbelastung, ist eine höhere Energieaufnahme der Scheibe bei vorgegebener Temperaturgrenze ermöglicht. Es liegt auch geringerer Verschleiß vor, da der Verschleiß mit der Temperatur überproportional steigt, bei einer Temperaturvergleichmäßigung bzw. -reduzierung demzufolge eine Reduzierung des Verschleisses erreicht wird. Durch Vergleichmäßigung der Flächenpressung und die gleichmäßigere Bremsscheibenbelastung ist natürlich auch die Gefahr der Wärmerißentstehung reduziert.

Ein weiterer wesentlicher Vorteil von Bremsbelägen der vorgenannten Art liegt in wesentlich günstigeren Betriebskosten, da die einzelnen Belagelemente bzw. aus Belagelementen gebildete Gruppenelemente erheblich kostengünstiger sind als die bisher verwendeten Schwalbenschwanz - Belageinheiten in Element - bzw. Gesamtbauweise. Während es bei einteiligen Bremsbelägen bekannter Art, aber auch bei neueren, mehrteiligen Bremsbelägen erforderlich ist, bei einem Belagwechsel auch den vergleichsweise teuren Belagträger auszutauschen, ist es infolge der Aufteilung in Belaggruppen oder Einzelelemente, jeweils getragen von einem kostengünstigen Trägerblech, möglich, den Belagträger nach erneuter Bestückung mit Belagelementen bzw. -gruppen wieder zu verwenden. Die Belagelemente bilden in ihrer Gesamtanordnung vorzugsweise eine hinsichtlich der Bremsgeometrie vorteilhafte Kreisringsektorfläche, wodurch geringere Scheibenhohllaufneigung in Kauf zu nehmen ist. Die Reib- oder Belagelemente können Kreisform haben, sie können aber auch mehreckige Formgebung besitzen; sie können zusätzlich Verdreh-sicherungen aufweisen oder können in ihrer Formgebung so ausgebildet sein, daß sie sich gegen Verdrehung sperrend gegenseitig abstützen.

In einer vorteilhaften Ausgestaltung können je drei Einzelelemente zu einem gemeinsamen Belagelement zusammengefaßt werden, was bei kautschukgebundenen organischen Belagmaterialien sinnvoll ist. Es ist möglich, die Belagelemente in vielfältiger Weise gelenkig an ihrem unmittelbaren Träger d.h. am Trägerblech zu befestigen, so mit Nietverbindungen, Schraub-Verbindungen etc. Von besonderer Bedeutung ist die gezielte Einleitung der Zuspannkräfte an einem Bremsbelag der verwendungsgemäßen Art. So kann die Lasteinleitung von Seiten der Zuspannvorrichtung über ein Kugelgelenk erfolgen, und zwar jeweils im Schwerpunkt eines Halbbelages. Es ist auch möglich, die Gesamtzuspannkraft über einen Waagebalken einzuleiten, der die Zuspannkraft von einem gemeinsamen Hebel auf beide Halbbeläge gleichmäßig aufteilt.

Bei einteiligen Trägerplatten als Belagträger für die Belagelemente bzw. Gruppenelemente ist im Bereich der gemeinsamen Mittellinie des Trägers eine gewisse Verschwenkbarkeit, z.B. durch Materialschwächung möglich, welche sicherstellt, daß die in den Schwerpunkten der beiden Halbbeläge drückenden Hebelkräfte gleichmäßig auf die Dreiecks- bzw. Schwerpunkte der Einzel- bzw. Gruppenelemente verteilt werden (statisch bestimmte Kräftezerlegung).

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Figur 1 ist eine schematische Ansicht des aus mehreren Gruppenelementen bestehenden Bremsbelages gegenüber der Reibfläche einer schematisch angedeuteten Bremsscheibe, wobei zur Veranschaulichung der geometrischen Zuordnung auf die Darstellung des Belagträgers bzw. des Belaghalters verzichtet wurde;
Figur 2 ist eine Einzel-Schnittansicht von Linie II - II in Figur 3 unter Darstellung der Anlenkung zweier Belagelemente an einem Trägerblech und dessen Zuordnung zum Belagträger;
Figur 3 ist eine Draufsicht auf die Anordnung nach Figur 2;
Figur 4 ist eine gegenüber Figur 2 und 3 vergrößerte, schematisierte Einzel- Schnittansicht unter Darstellung des Kraftverlaufs an einem einzelnen Belagelement in seiner Zuordnung zum Trägerblech;
Figur 5 ist eine Unteransicht eines Belagträgers mit an diesem angelenkten Gruppenelementen, jeweils bestehend aus einem Trägerblech mit je 3 Belagelementen;
Figur 6 ist eine Längsansicht eines zur Halterung des Belagträgers nach Figur 5 dienenden Belaghalters;
Figur 7 ist eine gegenüber Figur 5 und 6 schematisierte Ansicht eines Belaghalters unter Darstellung der von unmittelbar angelenkten Gruppenelementen gebildeten Schwerpunkte D1,D2, und D3 und der durch die Schwerpunkte der Gruppenelemente gebildeten gemeinsamen Schwerpunkte zur Einleitung der halben Zuspannkraft je Belaghälfte;
Figur 8 ist eine der Fig.7 vergleichbare Ansicht eines Belaghalters mit an diesem unmittelbar angeordneten Belagelementen, wobei jeweils 3 Einzelelemente je Trägerblech jeweils zu einem gemeinsamen Belagelement zusammengefaßt sind;
Figur 9 ist eine der Figur 2 vergleichbare Schnittansicht unter Darstellung einer quasigelenkigen Anordnungen der Belagelemente am Trägerblech ohne das beanspruchte Kugelgelenk; und
Figur 10 ist eine den Fig. 2 und 9 vergleichbare Ansicht einer flach bauenden Anlenkung der Belagelemente am Trägerblech und Belagträger in ihrer Zuordnung zum Belaghalter.

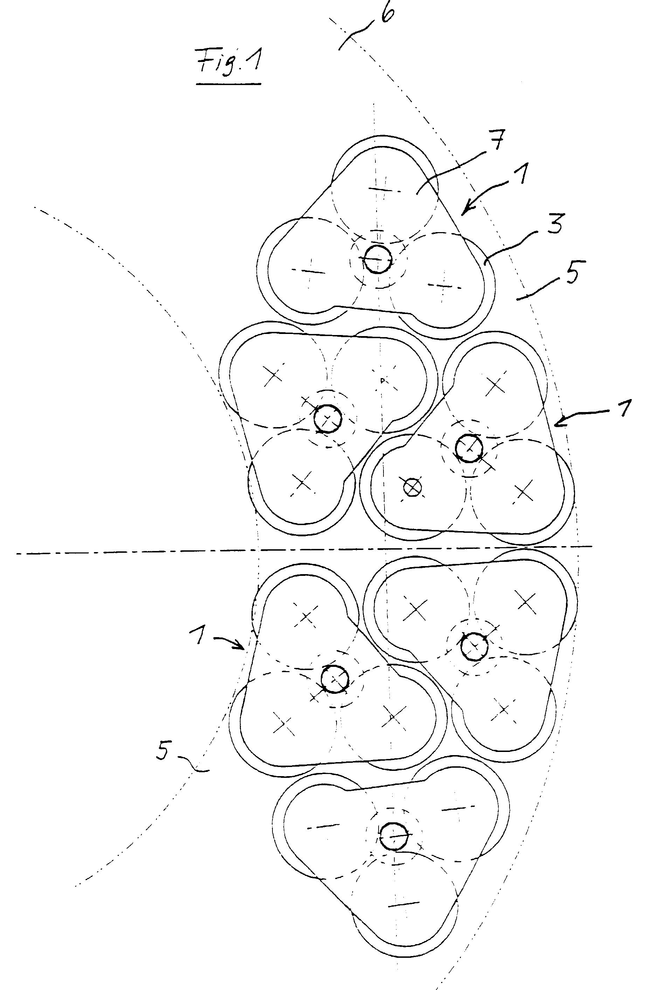

In Figur 1 der Zeichnung ist ein aus mehreren Gruppenelementen (1) mit Belagelementen (3) bestehender Bremsbelag in seiner Zuordnung zur Reibfläche (5) einer in ihren Umfangslinien angedeuteten, z.B. aus Stahl bestehenden Bremsscheibe (6) wiedergegeben. Die Gruppenelemente (1) sind jeweils aus den Belagelementen und einem sie tragenden Trägerblech (7) gebildet. Im dargestellten Ausführungsbeispiel sind 6 derartige Gruppenelemente (1) mit jeweils 3 als Bremsklötze ausgebildeten Belagelementen (3) auf Trägerblechen (7), also insgesamt 18 Belagelemente, vorhanden. Die Belagelemente sind vorzugsweise in ihrer Gesamtfläche als Kreisringsektorfläche angeordnet, wie aus Figur 1 ersichtlich ist, und können z.B aus Sintermetall bestehen.

Im Ausführungsbeispiel nach Fig. 1 sind jeweils 3 Reib- bzw. Belagelemente in nachfolgend erläuterter Weise an einem Trägerblech (7) angeordnet. Die verwendeten Trägerbleche (7) besitzen z.B. Dreiecksform, wobei die Belagelemente (3) an der der Reibfläche der Bremsscheibe zugewandten Seite der Trägerbleche (7) mit einem gewissen Freiheitsgrad der Verschwenkung angelenkt sind.

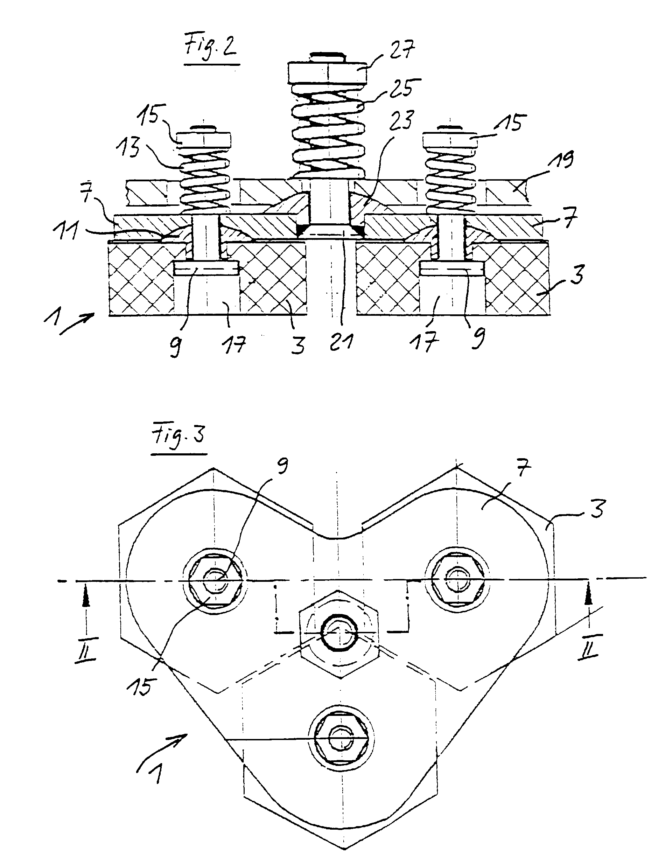

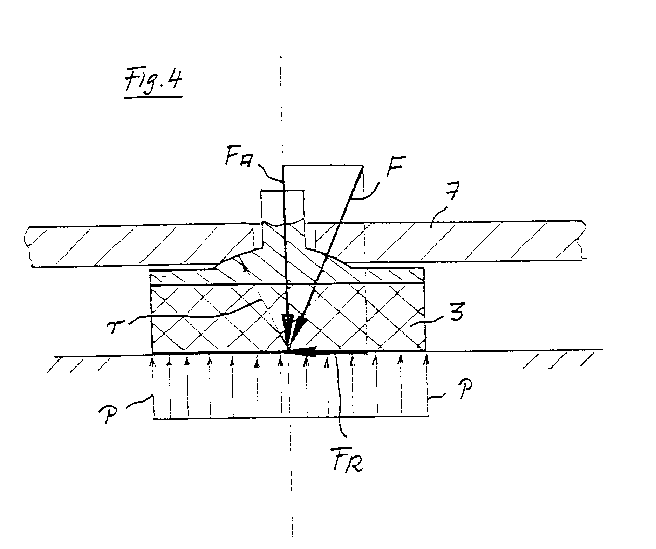

Gemäß Figur 2, welche einen Schnitt von Linie II - II in Figur 3 wiedergibt, ist jedes der Belagelemente (3) mittels einer Flachkopfschraube (9), einer Kuppe (11), einer Druckfeder (13) und einer Mutter (15) am Trägerblech (7) angelenkt. Die Flachkopfschraube (9) befindet sich in einer mittigen Ausnehmung (17) des Belagelements (3) und erstreckt sich in dargestellter Weise durch Bohrungen der Kuppe und des Trägerbleches, wobei unter Zwischenlagerung der Druckfeder (13) eine Gegenverschraubung mit Hilfe der Mutter (15) vorgesehen ist. Die Kuppe (11) ist in einer schalenförmigen Ausnehmung des Trägerbleches (7) eingefügt, die Lagerung jedes Belagelementes ist also durch eine Kugelpfanne und eine Kugelkalotte gebildet. Gemäß Figur 4, welche schematisch die Führung eines der Belagelemente am Trägerblech (7) veranschaulicht, wirken am Belagelement die Kräfte F_{R} als Reibkraft und die Anpresskraft F_{A}, woraus die resultierende Kraft F gebildet ist. Diese steht jeweils senkrecht zur Kugelfläche der Kugelpfanne. Der Mittelpunkt des Radius r ist in den Flächenschwerpunkt der Reibfläche des Belagelements gelegt. Die resultierende Kraft F verläuft demnach notwendigerweise durch den Flächenschwerpunkt des Belagelements; nur auf diese Weise ist eine annähernd konstante Flächenpressung P des Belagelements gegenüber der Reibfläche (5) der Bremsscheibe erzielbar.

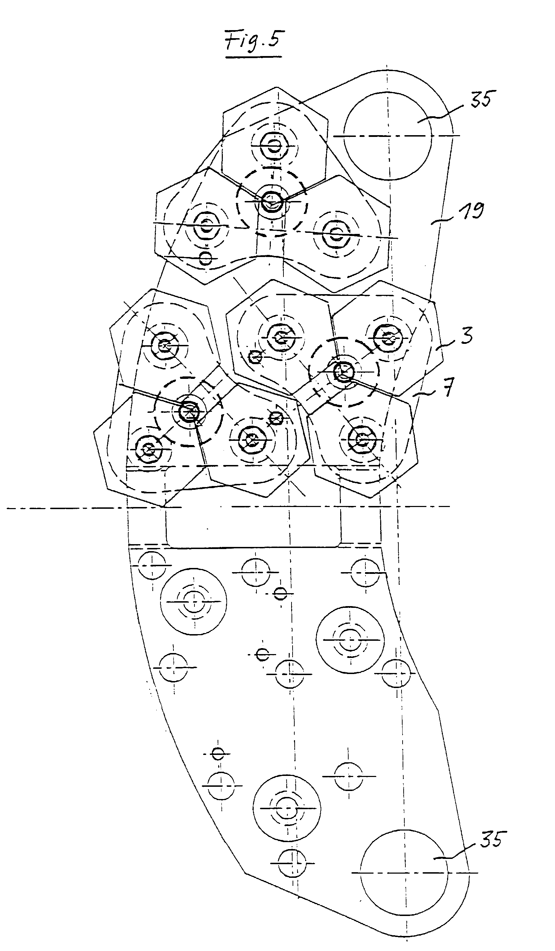

Die unter Bezugnahme auf die zur Vergleichmäßigung der Anpreßkraft erläuterte Anordnung der Belagklötze bzw. Belagelemente am Trägerblech (7) gilt in gleicher Weise für die Anordnung der einzelnen Trägerbleche (7) an einem Belagträger (19) der z.B. in Figur 5 dargestellten Form. Der Belagträger ist als Trägerplatte vorgesehen, um die in Figur 1 schematisch dargestellten Trägerbleche (7) zu haltern. Hierbei sind (Figur 2) jedem der Trägerbleche wiederum eine Schraube (21), eine Kuppe (23), eine Druckfeder (25) und eine Mutter (27) zugeordnet; die einzelnen Trägerbleche (7) sind demnach in gleicher Weise wie die Belagelemente mit einem gewissen Freiheitsgrad der Schwenkbarkeit am Belagträger (19) angebracht. Figur 5 zeigt in Unteransicht an einem Belagträger (19) 3 der Trägerbleche (7) mit jeweils 3 an diesen angeordneten Belagelementen.

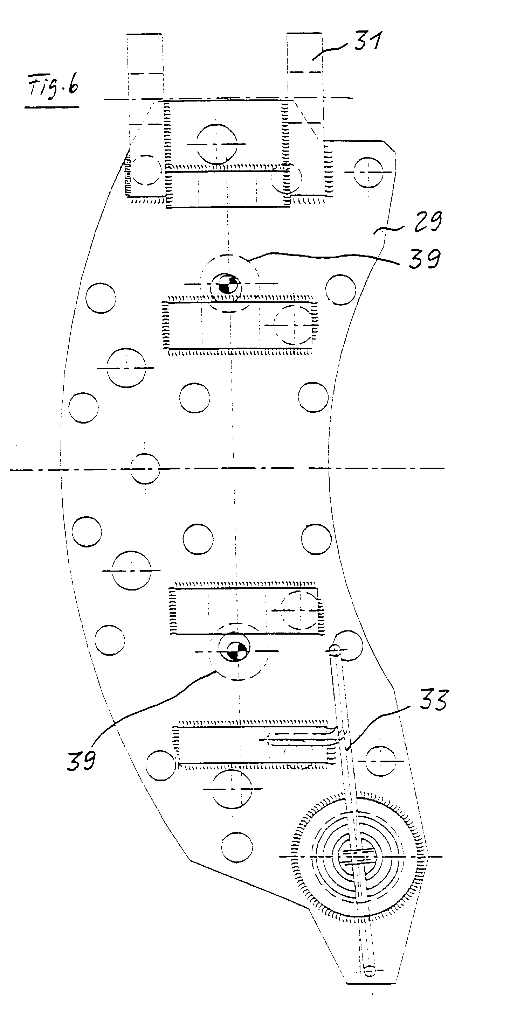

Der Belagträger (19) mit den an ihm angeordneten 18 Belagelementen ist seinerseits an dem in Figur 6 in rückwärtiger Ansicht dargestellten Belaghalter (29) montierbar. Der Belaghalter weist zur Aufhängung an einer Hängelasche dienende Augen (31) auf und trägt den Belagträger (19) von im wesentlichen vergleichbarer Konfiguration an seiner der Bremsscheibe zugewandten Seite. Hierzu ist der Belaghalter (29) beispielsweise an seinem nach Figur 6 unteren Ende mit einem durch einen Federbügel (33) verspannbaren Bolzen versehen, welcher an der bezüglich der Darstellung nach Figur 6 abgewandten Seite durch eines der Augen (35) des Belagträgers hindurchgreift, wobei weitere, vom Belagträger sich erstreckende Befestigungselemente (nicht dargestellt) durch Öffnungen des Belaghalters hindurchführbar und gegenüber dem Belaghalter verschraubbar sind. Es liegt hierdurch eine schnelle Demontierbarkeit des Belagträgers mit den an ihm angeordneten Belagelementen vom Belaghalter vor, da nach Lösen der vorgenannten Befestigungselemente bzw. Herausziehen des vom Federbügel verspannbaren Haltebolzens ein Abziehen des Belagträgers quer zum Belaghalter ermöglicht ist.

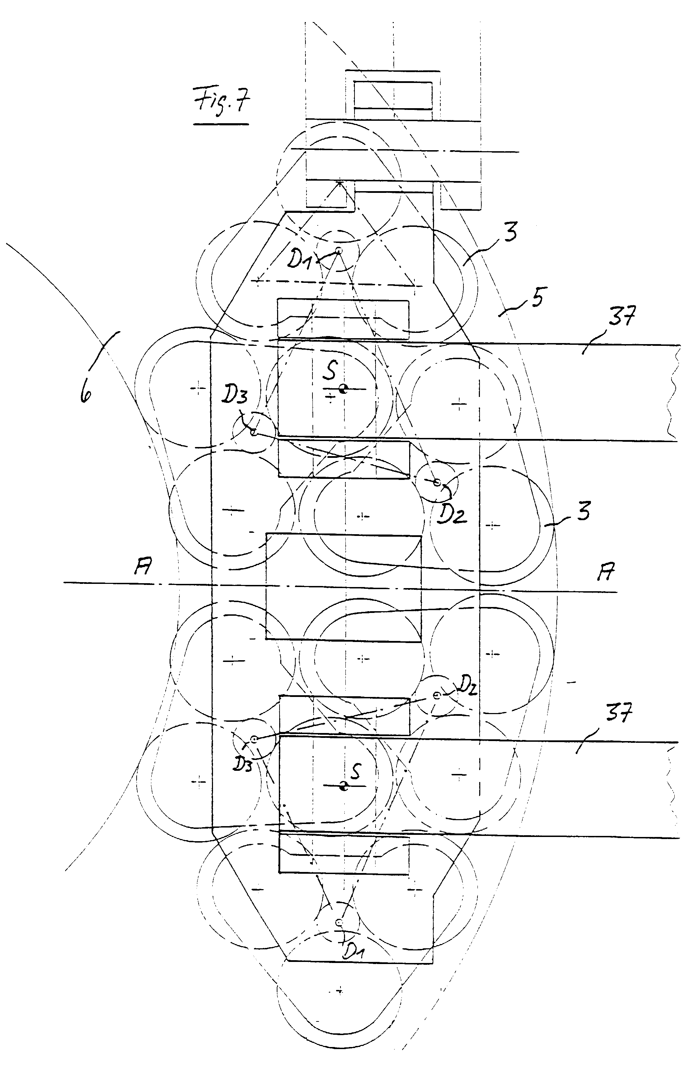

Die Trägerbleche mit den Belagelementen wurden unter Bezugnahme auf Fig. 2 und 5 als an einem Belagträger gehaltert erläutert, wobei der Belagträger seinerseits an einem Belaghalter (Fig. 6) befestigbar ist. Für gewisse Anwendungsfälle ist auch eine direkte Befestigung der Trägerbleche am Belaghalter vorgesehen (Fig. 7).

Ein wesentliches Merkmal der erfindungsgemäßen Belaghalterung zum Zwecke der Vergleichmäßigung der Flächenpressung ist in der geometrischen Zuordnung der einzelnen Belagelemente, der sie tragenden Trägerbleche und deren Anordnung an einem Tragkörper (Belagträger oder Belaghalter) zu sehen. In der in Figur 7 schematisch wiedergegebenen unmittelbaren Halterung der Trägerbleche an einem Belaghalter ist ersichtlich, daß die einzelnen Gruppenelemente, bestehend aus 3 jeweils von einem Trägerblech getragenen Belagelementen, einen gemeinsamen Schwerpunkt Dl, D2, und D3 als Einleitungsstelle der Belaganpresskräfte aufweisen. Die Schwerpunkte Dl, D2 und D3 der 3 Gruppenelemente (1) bilden wiederum ein Dreieck, dessen Schwerpunkt S die Krafteinleitungsstelle der halben Gesamtzuspannkraft je Belag pro Scheibenseite bildet. Es ist hierbei davon auszugehen, daß zu beiden Seiten der Mittelachse 2 Halbbeläge mit je 9 Belagelementen an jeweils 3 Trägerblechen denkbar sind. Folglich sind zwei Schwerpunkte S pro Gesamtbelag vorhanden. An den beiden Schwerpunkten S liegen die Lasteinleitungsstellen der in Fig. 7 schematisch wiedergegebenen Bremshebel (37) oder entsprechende Druckpunkte von hydraulischen oder pneumatischen Bremskolben (nicht dargestellt). Vorzugsweise ist im Bereich der Krafteinleitung d.h. im Bereich des Schwerpunktes S jeweils eine Distanzscheibe vorgesehen, derart, daß eine nahezu punktuelle Kraftübertragung vom Belaghalter auf den Belagträger ermöglicht ist. Die Distanzscheiben können an einer der einander zugewandten Flächen vom Belagträger oder Belaghalter ausgebildet sein. Die über die Bremshebel (37) auf die in Fig.7 oberen und unteren Hälften des Gesamtbelages eingeleiteten Anpreßkräfte, die jeweils der halben Gesamtzuspannkraft je Belag entsprechen, werden durch die vorbeschriebene Anordnung demnach über die Schwerpunkte S bzw. D1, D2 und D3 gleichmäßig in die Trägerbleche (7) eingeleitet, wobei die Trägerbleche und die an diesen angeordneten Belagelemente die vorstehend erläuterte Lagerung aufweisen, so daß insgesamt eine Vergleichmäßigung der Flächenpressung des Gesamtbelages erreicht wird. Insgesamt wird eine gleichmäßigere Bremsscheibenbelastung erzielt (konstante Energiezufuhr über die Reibfläche) und somit die Gefahr der Wärmerißbildung reduziert. Ein weiterer wesentlicher Vorteil ist im quietschfreien Bremsverhalten der Belagelemente zu sehen, da sich diese infolge ihrer erfindungsgemäßen Lagerung nicht "aufstellen".

Was die Lasteinleitung am Belaghalter betrifft, so ist es möglich, diese von beiden Seiten der Zuspannvorrichtung über ein Kugelgelenk vorzusehen, und zwar jeweils im Schwerpunkt eines Halbbelages, wie vorstehend unter Bezugnahme auf Fig.7 erläutert wurde. Die Teilung des Belages in 2 Halbbeläge bei Einleitung jeweils hälftiger Zuspannkräfte setzt voraus, daß zwischen den beiden Hälften des Belagträgers (Fig.7) eine gewisse Eigenbeweglichkeit möglich ist. Fig.5 und 7 veranschaulichen, daß im Bereich der Mittellinie des Belagträgers bzw. Belaghalters eine durch ein Fenster bzw. eine Ausnehmung gebildete Schwächung des Materials vorgesehen ist, derart, daß die Hälften des Belagträgers bzw. -halters bezüglich der Mittellinie begrenzt schwenkbar sind, was in Verbindung mit der schwerpunktbezogenen Krafteinleitung zur Vergleichmäßigung der Anpreßkräfte beiträgt. Im Sinne der Einleitung der Zuspannkräfte ist es von besonderem Vorteil, mittels eines Waagebalkens zu arbeiten, der die Zuspannkraft von einem gemeinsamen Hebel auf beide Halbbeläge gleichmäßig aufteilen kann. Der gemeinsame Hebel verläuft hierbei mittig zum Belagträger bzw. Belaghalter.

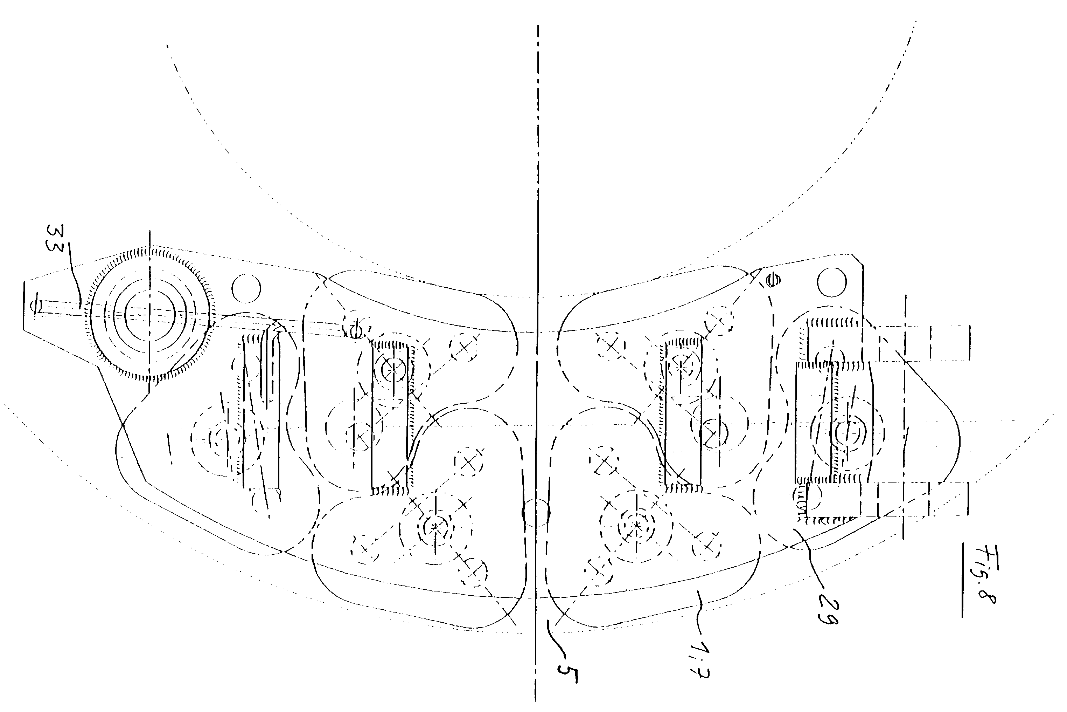

Die in Figur 2,3 und 5 als sechseckig wiedergegebenen Belagelemente können jede andere Konfiguration besitzen, sie können z.B. rund sein, wie dies die schematische Ansicht nach Figur 1 und 7 veranschaulicht. Obwohl vorzugsweise pro Trägerblech 3 Belagelemente vorgesehen sind, kann deren Anzahl auch variieren, jeweils unter der Voraussetzung, daß die Einleitung der Anpreßkräfte in Folge der geometrischen Zuordnung der Schwerpunkte zu einer Vergleichmäßigung führt. Es ist auch möglich, je 3 Belagelemente zu einem einzigen Element zusammenzufassen; dies ist sinnvoll z.B. bei kautschukgebundenem, organischem Belagmaterial. In Fig. 8 ist eine derartige Anordnung wiedergegeben. Es sind 3 herzförmige Belagelemente pro Belaghälfte vorgesehen, also insgesamt 6 Belagelemente, welche von Trägerblechen gehaltert sind. Wie im Falle der Ausführungsform nach Fig. 7 sind die Trägerbleche unmittelbar am Belaghalter schwenkbar angeordnet, wobei die Krafteinleitung wiederum pro Belaghälfte im durch die Einzelschwerpunkte der 3 Belagelemente gebildeten zentralen Schwerpunkt erfolgt.

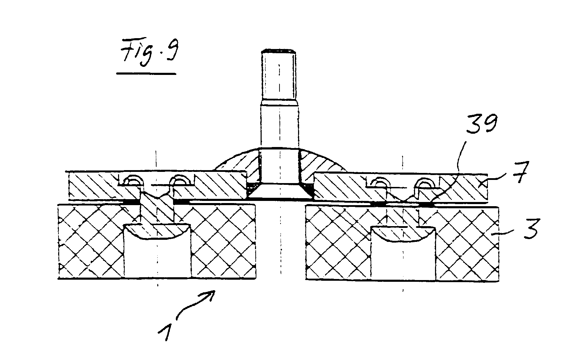

Gemäß Figur 9 können die Einzelelemente bzw. Belagelemente auch anders als im beanspruchten Bremsbelag "quasigelenkig" am Trägerblech angeordnet sein, so z.B. durch Nietung, Schweißpunkt-Verbindung, durch Schraubverbindung etc. Die bei der Ausführungsform nach Fig.9 vorgesehenen Distanzstücke (39), welche jeweils zwischen den Belagelementen (1) und dem Trägerblech (7) eingefügt sind, erlauben die erforderliche begrenzte Verschwenkbarkeit zum Zwecke der Vergleichmäßigung der Anpreßkräfte. Natürlich ist es auch möglich, die Einzelelemente oder einen Anteil derselben verdrehsicher (z.B. Stift und Bohrung) auszubilden.

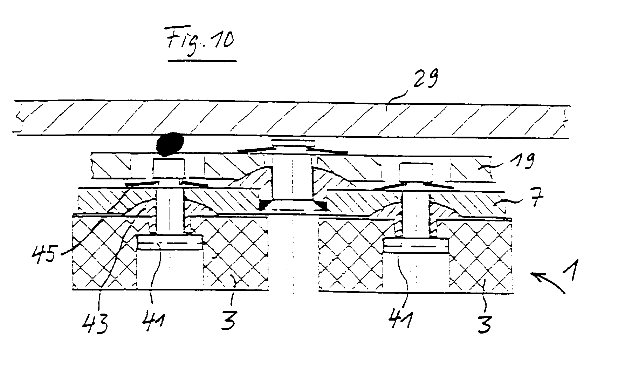

In Fig. 10 der Zeichnung ist eine gegenüber der vergleichbaren Ansicht nach Fig.3 wesentlich niedriger bauende Ausführungsform der Halterung der Belagelemente (1) am Trägerblech (7) und der Halterung des Trägerblechs am Belagträger (19) dargestellt. Es sind den Flachkopfschrauben (9) vergleichbare Haltebolzen (41) vorgesehen, welche jeweils Bohrungen im Belagelement, in einer Kuppe (43) und im Trägerblech (7) durchgreifen, wobei Tellerfedern (45) die Haltebolzen hintergreifen, derart, daß die Belagelemente durch Federkraft an das Trägerblech herangezogen werden; in gleicher Weise ist die Halterung u. Verspannung des Trägerblechs gegenüber dem Belagträger ausgebildet. Der Vorteil der Anordnung nach Fig. 10 ist darin zu sehen, daß zur Demontage des Belagträgers vom Belag-halter keine vertikalen Bewegungen relativ zu diesem erforderlich sind. Der Belagträger kann nach Lösen der unter Bezugnahme auf Fig.6 angedeuteten Bolzenhalterung - nach Lösen derselben - seitlich oder stirnseitig abgezogen werden. Hierdurch ist es sehr einfach, den Belagträger ohne Demontage des Belaghalters zu lösen, sodaß in kürzester Zeit ein kompletter Austausch des Belagträgers vorgenommen werden kann. Es ist auch möglich, bei Bedarf einzelne der Belagelemente und/oder einzelne der Trägerbleche mit an diesem gehalteren Belag-elementen auszutauschen. Dies stellt einen wesentlichen Vorteil gegenüber bekannten Konstruktionen mit sogenannter Schwalbenschwanzführung dar, bei welchen einteilige Bremsbeläge nach Verschleiß zusammen mit ihrem Belagträger ausgetauscht werden müssen, während die erfindungsgemäße Ausbildung des Bremsbelages die erneute Verwendung des Belagträgers, ggf. auch der Trägerbleche, vorsieht.

### Bezugszeichenliste

- 1: Gruppenelement
- 3: Belagelement
- 5: Reibfläche
- 6: Bremsscheibe
- 7: Trägerblech
- 9: Flachkopfschraube
- 11: Kuppe
- 13: Druckfeder
- 15: Mutter
- 17: Ausnehmung
- 19: Belagträger
- 21: Schraube
- 23: Kuppe
- 25: Druckfeder
- 27: Mutter
- 29: Belaghalter
- 31: Auge
- 33: Federbügel
- 35: Auge
- 37: Bremshebel
- 39: Distanzstück
- 41: Haltebolzen
- 43: Kuppe
- 45: Tellerfeder
- D1: Schwerpunkt
- D2: Schwerpunkt
- D3: Schwerpunkt
- S: Schwerpunkt

## Patentansprüche

1. Bremsbelag für Teilbelag-Scheibenbremsen, insbesondere von Schienenfahrzeugen, bestehend aus mehreren Belagelementen (3), welche an einer einen Tragkörper (19; 29) aufweisenden Halterung geführt und durch am Tragkörper (19; 29) einwirkende Bremsbetätigung an die Reibfläche einer Bremsscheibe (6) anpreßbar sind, wobei die Belagelemente (3) an Trägerblechen (7) angeordnet und die Trägerbleche schwenkbar am Tragkörper gehaltert sind, **gekennzeichnet durch** folgende Merkmale:
a) die Belagelemente (3) sind jeweils mittels eines Kugelgelenkes an der zugewandten Seite des Trägerbleches schwenkbar geführt;
b) die Belagelemente (3) sind im Rahmen ihrer Verschenkbarkeit jeweils mittels einer Feder (13 ; 45) elastisch gegenüber dem Trägerblech (7) verspannt.

2. Bremsbelag nach Anspruch 1, **dadurch gekennzeichnet,** daß die Belagelemente (3) jeweils mittels einer Kugelkalotte (11; 43) in einer Kugelpfanne der zugewandten Seite des Trägerbleches (7) schwenkbar geführt sind.

3. Bremsbelag nach Anspruch 1 oder 2, **gekennzeichnet durch** folgende Merkmale:
a) es sind mehrere, jeweils aus Belagelementen (3) und Trägerblechen (7) gebildete Gruppenelemente (1) je Belaghälfte vorgesehen;
b) die Gruppenelemente (1) weisen in ihrem Schwerpunkt jeweils die Einleitungsstelle der Belaganpreßkräfte auf; und
c) die Schwerpunkte jeweils wenigstens dreier Gruppenelemente (1) bilden ein Dreieck, dessen Schwerpunkt die Krafteinleitungsstelle der halben Gesamtzuspannkraft je Bremsbelag pro Scheibenseite bildet.

4. Bremsbelag nach einem der vorangegangenen Ansprüche, **gekennzeichnet dadurch**, daß der Tragkörper aus einem plattenförmigen Belagträger (19) besteht, daß die Gruppenelemente (1) schwenkbar am Belagträger (19) angelenkt sind, und daß der Belagträger (19) seinerseits schnelllöslich am Belaghalter (29) der Bremsscheibenanordnung befestigt ist.

5. Bremsbelag nach einem der vorangehenden Ansprüche, **dadurch gekennzeichnet,** daß die Gruppenelemente unmittelbar am Belaghalter (29) der Bremsscheibenanordnung schwenkbar angeordnet sind.

6. Bremsbelag nach einem der vorangehenden Ansprüche, **dadurch gekennzeichnet,** daß die Trägerbleche jeweils ein einziges Belagelement (3) tragen und schwenkbar am plattenförmigen Belagträger (19) angelenkt sind und, daß der Belagträger schnelllöslich am Belaghalter (29) der Bremsscheibenanordnung befestigbar ist.

7. Bremsbelag nach einem der vorangehenden Ansprüche, **dadurch gekennzeichnet,** daß Trägerbleche (7) jeweils ein einziges Belagelement (3) tragen und unmittelbar am Belaghalter (29) der Bremsscheibenanordnung schwenkbar angeordnet sind.

8. Bremsbelag nach einem der vorangehenden Ansprüche, **dadurch gekennzeichnet,** daß im Bereich der Krafteinleitung der beiden Belaghälften je eine Distanzscheibe zwischen Belagträger (15) und Belaghalter (29) vorgesehen ist, derart, daß die Kraftübertragung vom Belaghalter auf den Belagträger im Bereich der Distanzstücke erfolgt.

9. Bremsbelag nach einem der vorangehenden Ansprüche, **dadurch gekennzeichnet,** daß der Belagträger (19) im Bereich seiner Mittellinie begrenzt um diese schwenkbar ist.

10. Bremsbelag nach Anspruch 9, **dadurch gekennzeichnet,** daß der Belagträger (19) im Bereich seiner Mittellinie mit einer Materialschwächung versehen ist.

11. Bremsbelag nach einem der vorangehenden Ansprüche, **dadurch gekennzeichnet,** daß der Belaghalter (29) bei unmittelbarer Anlenkung der Belag- und Gruppenelemente im Bereich seiner Mittellinie begrenzt um diese schwenkbar ist.

12. Bremsbelag nach Anspruch 11, **gekennzeichnet durch** eine im Bereich der Mittellinie des Belaghalters befindliche Materialschwächung.

13. Bremsbelag nach einem der vorhergehenden Ansprüche, **dadurch gekennzeichnet, daß** jeweils ein die Belagelemente (3) und das Trägerblech (7) durchsetzendes Halteelement (9; 41) vorgesehen ist, an welchem die Feder (13 ; 45) angreift.

## Claims

1. Brake lining for partial-lining disc brakes, in particular of rail vehicles, comprising a plurality of lining elements (3) which are carried on a holding device, which has a supporting body (19; 29), and can be pressed against the friction surface of a brake disc (6) by a brake application acting on the supporting body (19; 29), the lining elements (3) being arranged on carrier plates (7) and the carrier plates being held on the supporting body in a manner such that they can be swivelled, characterised by the following features:
a) by means of a ball-and-socket joint in each case, the lining elements (3) are carried on the facing side of the carrier plate in a manner such that they can be swivelled;
b) by means of a spring (13; 45) in each case, the lining elements (3) are stayed elastically with respect to the carrier plate (7), within the bounds of their swivelling capacity.

2. Brake lining according to claim 1, characterised in that by means of a spherical cap (11; 43) in each case, the lining elements (3) are carried in a ball socket of the facing side of the carrier plate (7) in a manner such that they can be swivelled.

3. Brake lining according to claim 1 or 2, characterised by the following features:
a) for each lining half, there are provided a plurality of group elements (1), each made up of lining elements (3) and carrier plates (7);
b) the group elements (1) have in their centre of gravity the introduction point of the lining contact forces in each case; and
c) the centres of gravity of in each case at least three of the group elements (1) form a triangle, the centre of gravity of which forms the force-introduction point of half of the total application force for each brake lining per disc side.

4. Brake lining according to one of the preceding claims, characterised in that the supporting body comprises a plate-like lining carrier (19), in that the group elements (1) are coupled to the lining carrier (19) in a manner such that they can be swivelled, and in that the lining carrier (19) is itself fastened to the lining holder (29) of the brake disc arrangement in a manner such that it can be quickly detached.

5. Brake lining according to one of the preceding claims, characterised in that the group elements are arranged directly on the lining holder (29) of the brake disc arrangement in a manner such that they can be swivelled.

6. Brake lining according to one of the preceding claims, characterised in that the carrier plates each carry a single lining element (3) and are coupled to the plate-like lining carrier (19) in a manner such that they can be swivelled, and in that the lining carrier can be fastened to the lining holder (29) of the brake disc arrangement in a manner such that it can be quickly detached.

7. Brake lining according to one of the preceding claims, characterised in that the carrier plates (7) each carry a single lining element (3) and are arranged directly on the lining holder (29) of the brake disc arrangement in a manner such that they can be swivelled.

8. Brake lining according to one of the preceding claims, characterised in that in the region of the force introduction of the two lining halves, there is provided between the lining carrier (19) and the lining holder (29) a respective spacer disc, in such a way that the transfer of force from the lining holder to the lining carrier takes place in the region of the spacers.

9. Brake lining according to one of the preceding claims, characterised in that in the region of its centre line, the lining carrier (19) can be swivelled to a limited extent about the said centre line.

10. Brake lining according to claim 9, characterised in that the lining carrier (19) is provided with a material weakening in the region of its centre line.

11. Brake lining according to one of the preceding claims, characterised in that in the case of direct coupling of the lining elements and group elements, the lining holder (29), in the region of its centre line, can be swivelled to a limited extent about the said centre line.

12. Brake lining according to claim 11, characterised by a material weakening in the region of the centre line of the lining holder.

13. Brake lining according to one of the preceding claims, characterised in that there is provided in each case a holding element (9; 41) which penetrates the lining elements (3) and the carrier plate (7) and on which the spring (13; 45) engages.

## Revendications

1. Garniture de frein pour des freins à disque à garniture partielle, notamment de véhicules sur rails, constituée de plusieurs éléments de garniture (3) qui sont guidés sur une structure de support comportant un corps d'appui (19, 29) et qui peuvent être pressés contre la surface de friction d'un disque de frein (6) au moyen d'un actionneur de frein agissant sur le corps d'appui (19; 29), les éléments de garniture (3) étant disposés sur des plaquettes de support (7) et les plaquettes de support étant maintenues à pivotement sur le corps d'appui, caractérisée par les caractéristiques suivantes:
a) les éléments de garniture (3) sont chacun guidés en pivotement sur la face, placée en regard, de la plaquette de support, au moyen d'une articulation sphérique;
b) les éléments de garniture (3) sont, dans le cadre de leur montage pivotant, soutenus chacun élastiquement par rapport à la plaquette de support (7), au moyen d'un ressort (13 ; 45).

2. Garniture de frein selon la revendication 1, caractérisée en ce que les éléments de garniture (3) sont chacun guidés en pivotement au moyen d'une calotte sphérique (11,43) dans un coussinet sphérique de la face, placée en regard, de la plaquette de support (7).

3. Garniture de frein selon la revendication 1 ou 2, caractérisée par les caractéristiques suivantes:
a) plusieurs groupes d'éléments (1), respectivement formes d'éléments de garniture (3) et de plaquettes de support (7), sont prévus pour chaque demi-garniture;
b) les groupes d'éléments (1) présentent en leur barycentre le point d'application respectif des forces de pression de la garniture; et
c) les barycentres respectifs d'au moins trois groupes d'éléments (1) forment un triangle, dont le barycentre constitue le point d'application de la moitié de la force de serrage complète de chaque garniture de frein, pour chaque face du disque.

4. Garniture de frein selon l'une des revendications précédentes, caractérisée en ce que le corps d'appui est constitué par un porte-garniture en forme de plaque (19), en ce que les groupes d'éléments (1) sont articulés sur le porte-garniture (19), avec une possibilité de pivotement, et en ce que le porte-garniture (19) est, de son côté, fixé au support de garniture (29) de l'ensemble à disque de frein, en en étant rapidement détachable

5. Garniture de frein selon l'une des revendications précédentes, caractérisée en ce que les groupes d'éléments sont directement montés a pivotement sur le support de garniture (29) de l'ensemble à disque de frein.

6. Garniture de frein selon l'une des revendications précédentes, caractérisée en ce que les plaquettes de support portent chacune un élément de garniture unique (3) et sont articulées sur le porte-garniture en forme de plaque (19), avec une possibilité de pivotement, et en ce que le porte-garniture peut être fixé au support de garniture (29) de l'ensemble à disque de frein, en en étant rapidement détachable.

7. Garniture de frein selon l'une des revendications précédentes, caractérisée en ce que des plaquettes de support (7) portent chacune un élément de garniture unique (3) et sont directement montées à pivotement sur le support de garniture (29) de l'ensemble à disque de frein.

8. Garniture de frein selon l'une des revendications précedentes, caractérisée en ce qu'une rondelle d'écartement est prévue entre le porte-garniture (15) et le support de garniture (29), dans la région d'application des forces de chacune des deux demi-garnitures. ceci de telle sorte que la transmission des forces du support de garniture au porte-garniture se fasse dans la région des pieces d'écartement

9. Garniture de frein selon l'une des revendications précédentes, caractérisée en ce que le porte-garniture (19) peut, dans la région de son axe médian, pivoter autour de ce dernier sur une plage limitée

10. Garniture de frein selon la revendication 9, caractérisée en ce que le porte-garniture (19) présente. dans la région de son axe médian, un affaiblissement par enlèvement de matière.

11. Garniture de frein selon l'une des revendications précédentes, caractérisée en ce que le support de garniture (29), en cas d'articulation directe des éléments de garniture ou des groupes d'éléments sur ce dernier, peut, dans la région de son axe médian, pivoter autour de ce dernier sur une plage limitée

12. Garniture de frein selon la revendication 11, caractérisée par un affaiblissement par enlèvement de matière situé dans la région de l'axe médian du support de garniture.

13. Garniture de frein selon l'une des revendications précédentes, caractérisée en ce qu'il est prévu un élément de retenue (9; 41) traversant chacun des éléments de garniture (3) et chacune des plaquettes de support (7), sur lequel s'appuie le ressort (13; 45).
